# EUROPEAN PATENT SPECIFICATION

(11) **EP 1 975 572 B1**
(45) Date of publication and mention of the grant of the patent: **22.05.2013**
(21) Application number: 08005207.9
(22) Date of filing: 19.03.2008
(51) Int. Cl.: G01D 11/24

(54) **Sensor apparatus**
Sensorgerät
Appareil de détection

(30) Priority: 27.03.2007 JP 2007082319
(43) Date of publication of application: 01.10.2008
(73) Proprietor: DENSO CORPORATION, Kariya-city, Aichi-pref. 448-8661 (JP)
(72) Inventor: Watanabe, Tatsuya, Kariya-city Aichi-pref., 448-8661 (JP); Imoto, Masahiko, Kariya-city Aichi-pref., 448-8661 (JP)
(74) Representative: Kuhnen & Wacker

(56) References cited:
- EP-A- 1 600 780
- EP-A- 1 739 439
- DE-A1- 10 221 931

## Description

The present invention relates to a sensor apparatus that detects a physical quantity and outputs a sensor signal indicative of the detected physical quantity.

A collision detection sensor apparatus disclosed in US 2005/0092422 corresponding to JP-A-2005-135850 includes a sensor body, an electronic circuit housed in the sensor body, and a connector terminal for electrically connecting the electronic circuit to an external apparatus.

A sensor apparatus disclosed in EP 1739439 includes a sensor body, a connector case made of resin and connector terminals are formed integrally with the connector case. A process sensor module disclosed in DE 10221931 includes a housing made of metal and a rotational sensor disclosed in EP 1600780 includes an elastic body fitted into a case by means of press fit and through a terminal is inserted.

The electronic circuit detects acceleration resulting from collision and outputs a sensor signal indicative of the detected acceleration. The electronic circuit includes a printed circuit board and electronic devices mounted on the printed circuit board. The connector terminal is integrally molded in a connector housing made of resin. The electronic circuit is accommodated in a cavity of the sensor body and electrically connected through a conductive wire to one end of the connector terminal.

The above-described sensor apparatus needs the printed circuit board, because the electronic devices are fixed together and electrically connected together by the printed circuit board. The use of the printed circuit board results in an increase of the number of components of the sensor apparatus. Accordingly, manufacturing cost of the sensor apparatus is increased.

In view of the above-described problem, it is an object of the present invention to provide a sensor apparatus constructed without using a printed circuit board.

According to an aspect of the present invention, a sensor apparatus includes a sensor body made of resin, an electronic circuit housed in the sensor body and including at least one electronic device configured to detect a physical quantity and output a sensor signal indicative of the detected physical quantity, and a conductive terminal for electrically connecting the electronic circuit to an external apparatus. The terminal is supported by the sensor body and has a first end portion located outside the sensor body and a second end portion located inside the sensor body. The electronic device is physically and electrically connected directly to the second end portion of the terminal. The electronic device and the second end portion of the terminal are integrally sealed in the sensor body.

The above and other objectives, features and advantages of the present invention will become more apparent from the following detailed description made with check to the accompanying drawings. In the drawings:
FIG 1 is a diagram illustrating a cross-sectional view of a sensor apparatus according to a first embodiment of the present invention;
FIG 2 is a diagram illustrating a back view of the sensor apparatus of FIG. 1, a lid of which is detached therefrom;
FIG. 3 is a diagram illustrating a cross-sectional view of a sensor apparatus according to a second embodiment of the present invention;
FIG. 4 is a diagram illustrating a back view of the sensor apparatus of FIG 3, a lid of which is detached therefrom;
FIG 5 is a diagram illustrating a cross-sectional view of a sensor apparatus according to a third embodiment of the present invention;
FIG 6 is a diagram illustrating a back view of the sensor apparatus of FIG 5, a lid of which is detached therefrom;
FIG 7 is a diagram illustrating a cross-sectional view of a sensor apparatus according to a fourth embodiment of the present invention;
FIG. 8 is a diagram illustrating a front view of the sensor apparatus of FIG 7;
FIG. 9 is a diagram illustrating a cross-sectional view of a sensor apparatus according to a fifth embodiment of the present invention;
FIG 10 is a diagram illustrating a front view of the sensor apparatus of FIG 9;
FIG 11 is a diagram illustrating a cross-sectional view of a sensor apparatus according to a sixth embodiment of the present invention;
FIG. 12 is a diagram illustrating a front view of the sensor apparatus of FIG. 11;
FIG. 13 is a diagram illustrating a cross-sectional view of a sensor apparatus according to a seventh embodiment of the present invention;
FIG. 14 is a diagram illustrating a front view of the sensor apparatus of FIG. 13;
FIG 15 is a diagram illustrating a cross-sectional view of a sensor apparatus according to an eighth embodiment of the present invention;
FIG. 16 is a diagram illustrating a front view of the sensor apparatus of FIG 15;
FIG 17A is a diagram illustrating a front view of an electronic circuit of the sensor apparatus of FIG 15, and FIG 17B is a diagram illustrating a cross-sectional view taken along line XVIIB-XVIIB of FIG 17A;
FIG 18 is a diagram illustrating a cross-sectional view of a sensor apparatus according to a ninth embodiment of the present invention;
FIG 19 is a diagram illustrating a back view of the sensor apparatus of FIG. 19, a lid of which is detached therefrom; and
FIG. 20 is a diagram illustrating a back view of a sensor apparatus, a lid of which is detached therefrom, according a modification of the present invention.

The embodiment fifth and sixth of the following embodiments describes the present invention and the other embodiments are employed as a reference example for understanding the present invention.

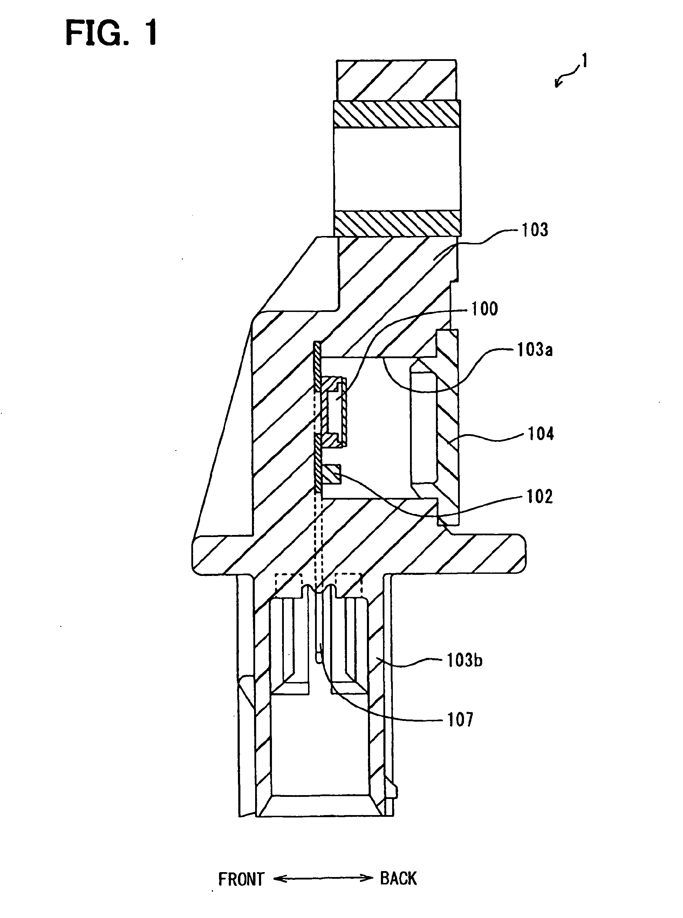

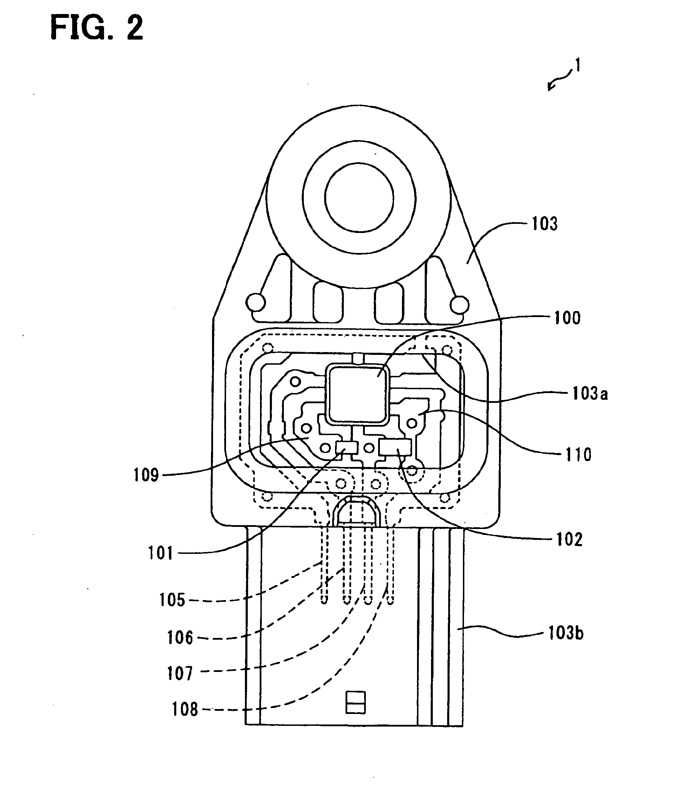

Referring to FIGS. 1 and 2, an acceleration sensor apparatus 1 according to a first embodiment of the present invention includes an acceleration sensing device 100, capacitors 101, 102, a sensor body 103, a lid 104, connector terminals 105-108, and conductive plates 109, 110.

The sensing device 100 detects acceleration and outputs a sensor signal indicative of the detected acceleration. The sensing device 100 is a semiconductor chip housed in a ceramic package. The capacitors 101, 102 allow the sensing device 100 to operate. The sensing device 100 and the capacitors 101, 102 construct an electronic circuit.

The sensor body 103 is made of resin and has a cavity 103a, in which the sensing device 100 and the capacitors 101, 102 are accommodated. The lid 104 is made of resin and has a plate-like shape. An opening of the cavity 103a is covered with the lid 104 so that the cavity 103a is sealed. As shown in the top of FIGS. 1, 2, the sensor body 103 can have a mounting hole. For example, the sensor apparatus 1 can be mounted to a vehicle by using the mounting hole to detect acceleration resulting from collision of the vehicle.

The connector terminals 105-108 are made from a metallic plate and formed in predetermined shapes. The connector terminals 105-108 electrically connect the electronic circuit, which is constructed with the sensing device 100 and the capacitors 101,102, to an external apparatus.

Specifically, the connector terminals 105-108 are integrally fixed to the sensor body 103 and have first end portions extending outwardly from the sensor body 103 and second end portions located in the cavity 103a. The sensor body 103 has a connector housing 103b, by which the first end portions of the connector terminals 105-108 are surrounded. The second end portions of the connector terminals 105-108 have front sides exposed to the cavity 103a and back sides, opposite to the front sides, fixed to a bottom wall of the cavity 103a. As shown in FIG 1, the sensing device 100 is directly fixed to the front sides of the second end portions of the connector terminals 105-108 by solder. Thus, the sensing device 100 is physically, electrically connected directly to the connector terminals 105-108. The capacitors 101, 102 are directly fixed to the front side of the second end portion of the connector terminal 107 by solder. Thus, the capacitors 101, 102 are physically, electrically connected directly to the connector terminal 107.

The conductive plates 109, 110 are formed in predetermined shapes. The conductive plates 109, 110 have front sides exposed to the cavity 103a and back sides, opposite to the front sides, fixed to the bottom wall of the cavity 103a. The sensing device 100 and the capacitors 101, 102 are directly fixed to the front sides of the conductive plates 109, 110 by solder. Thus, the sensing device 100 and the capacitors 101, 102 are physically, electrically connected directly to the conductive plates 109, 110.

In this way, the sensing device 100 and the capacitors 101, 102 are fixed together and electrically connected together through the second end portions of the connector terminals 105-108 and the conductive plates 109, 110, thereby constructing the electronic circuit located in the cavity 103a. Since the lid 104 seals the cavity 103a, the electronic circuit can be protected from damages due to dust, water, and the like.

As described above, according to the sensor apparatus 1 of the first embodiment, the sensing device 100 and the capacitors 101, 102 are physically, electrically connected directly to the connector terminals 105-108 and the conductive plates 109, 110. In such an approach, the sensing device 100 and the capacitors 101, 102 can be fixed together and electrically connected together without using a printed circuit board. Therefore, the sensor apparatus 1 can be manufactured at low cost, as compared to a conventional sensor apparatus that uses a printed circuit board.

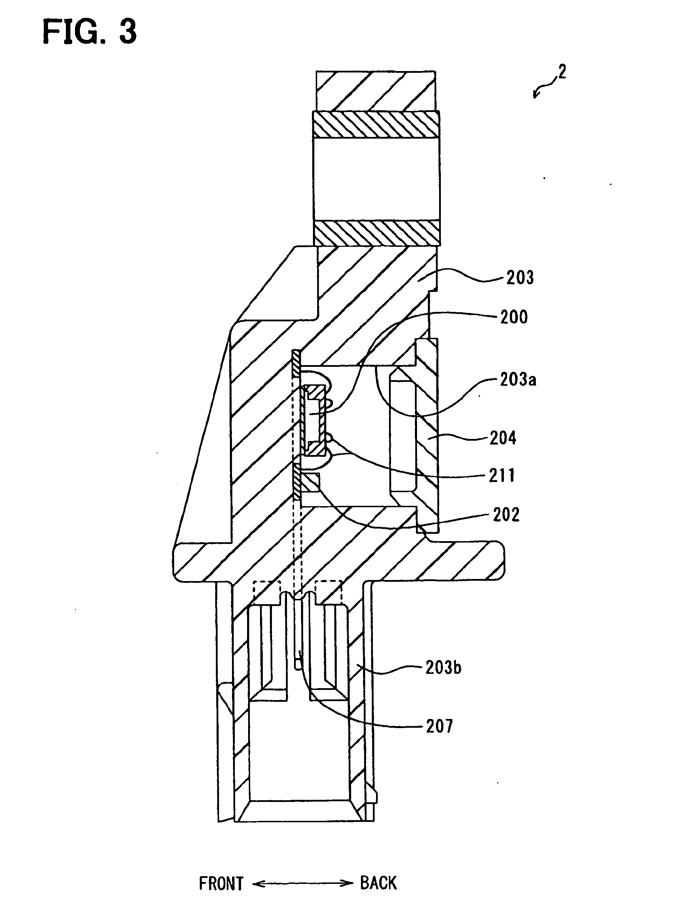

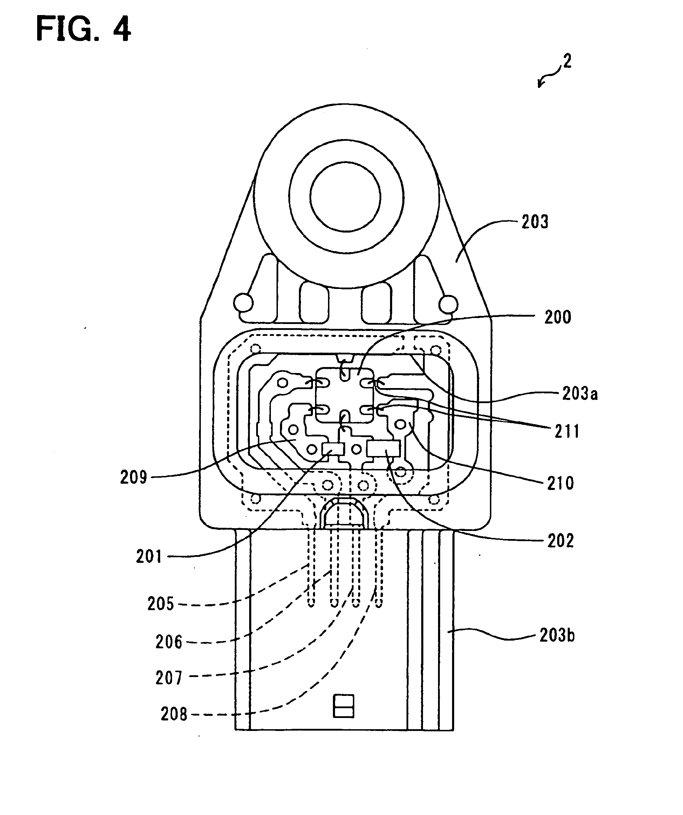

Referring to FIGS. 3 and 4, an acceleration sensor apparatus 2 according to a second embodiment of the present invention includes an acceleration sensing device 200, capacitors 201, 202, a sensor body 203, a lid 204, connector terminals 205-208, and conductive plates 209, 210. Differences between the first and second embodiments are as follows.

The sensing device 200 has a front side exposed to a cavity 203a of the sensor body 203 and a back side, opposite to the front side, fixed to a bottom wall of the cavity 203a through an adhesive. The front side of the sensing device 200 is provided with electrode pads. As shown in FIG 4, second end portions of the connector terminals 205-208 and the conductive plates 209, 210 are electrically connected to the sensing device 200 through bonding wires 211. The capacitors 201, 202 are soldered on the second end portion of the connector terminal 207 and the conductive plates 209, 210. The cavity 203a, which accommodates the sensing device 200 and the capacitors 201, 202, is filled with resin gel, and an opening of the cavity 203a is covered with the lid 204 to seal the cavity 203a.

As described above, according to the sensor apparatus 2 of the second embodiment, the sensing device 200 is directly fixed to the sensor body 203 and electrically connected through the bonding wires 211 to the connector terminals 205-208 and the conductive plates 209, 210. The capacitors 201, 202 are physically, electrically connected directly to the conductive plates 209, 210. In such an approach, the sensing device 200 and the capacitors 201, 202 can be physically, electrically connected together without using a printed circuit board. Therefore, the sensor apparatus 2 can be manufactured at low cost, as compared to a conventional sensor apparatus that uses a printed circuit board.

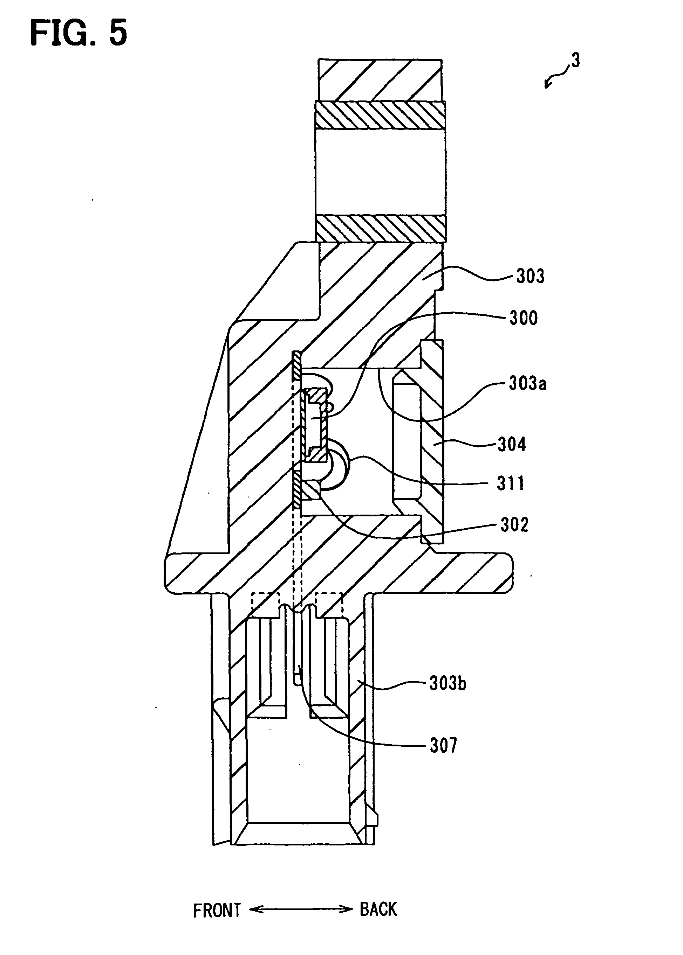

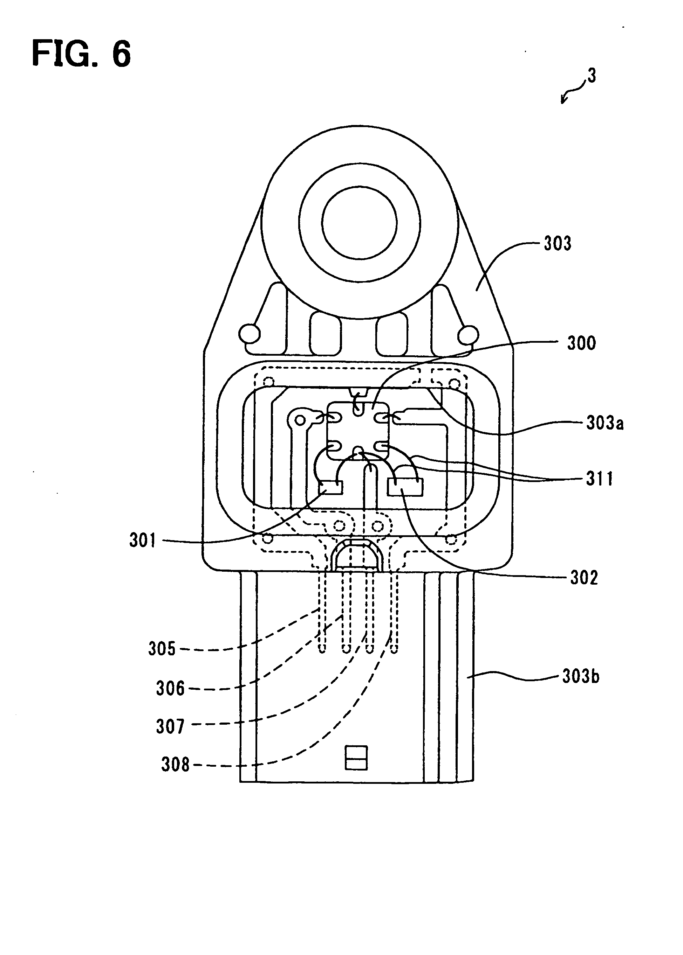

Referring to FIGS. 5 and 6, an acceleration sensor apparatus 3 according to a third embodiment of the present invention includes an acceleration sensing device 300, capacitors 301, 302, a sensor body 303, a lid 304, and connector terminals 305-308. Differences between the second and third embodiments are as follows.

The capacitors 301, 302 have front sides exposed to a cavity 303a of the sensor body 303 and back sides, opposite to the front sides, fixed to a bottom wall of the cavity 303a through an adhesive. The front sides of the capacitors 301, 302 are provided with electrode pads. As shown in FIG 6, the capacitors 301, 302 are electrically connected to the sensing device 300 through bonding wires 311 and electrically connected together through the bonding wire 311.

As described above, according to the sensor apparatus 3 of the third embodiment, the sensing device 300 and the capacitors 301, 302 are directly fixed to the sensor body 303 and electrically connected through the bonding wires 311 to the connector terminals 305-308. In such an approach, the sensing device 300 and the capacitors 301, 302 can be physically, electrically connected together without using a printed circuit board. Therefore, the sensor apparatus 3 can be manufactured at low cost, as compared to a conventional sensor apparatus that uses a printed circuit board.

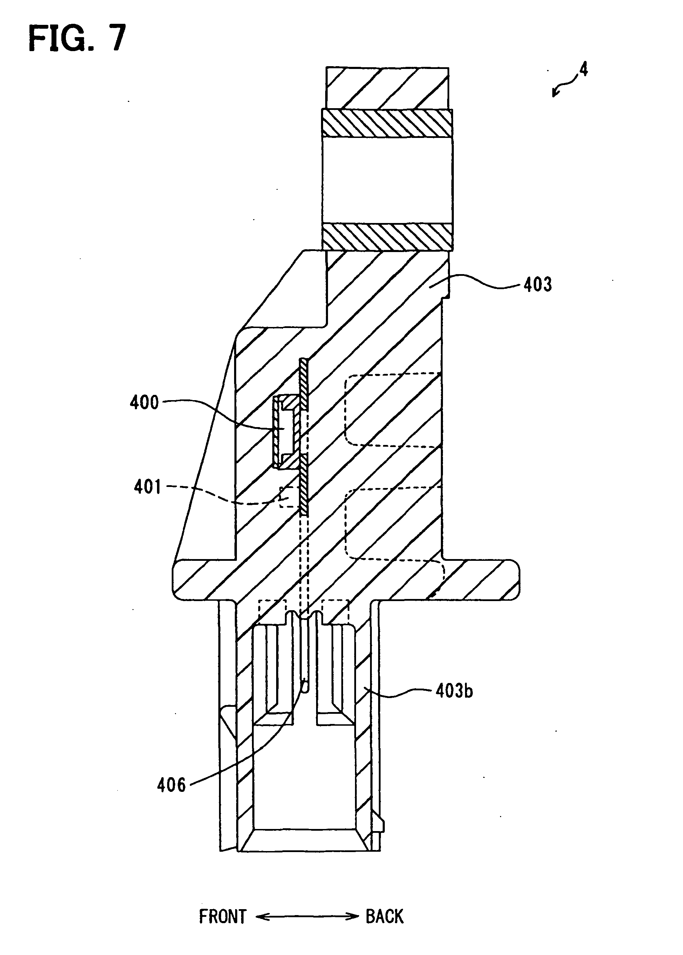

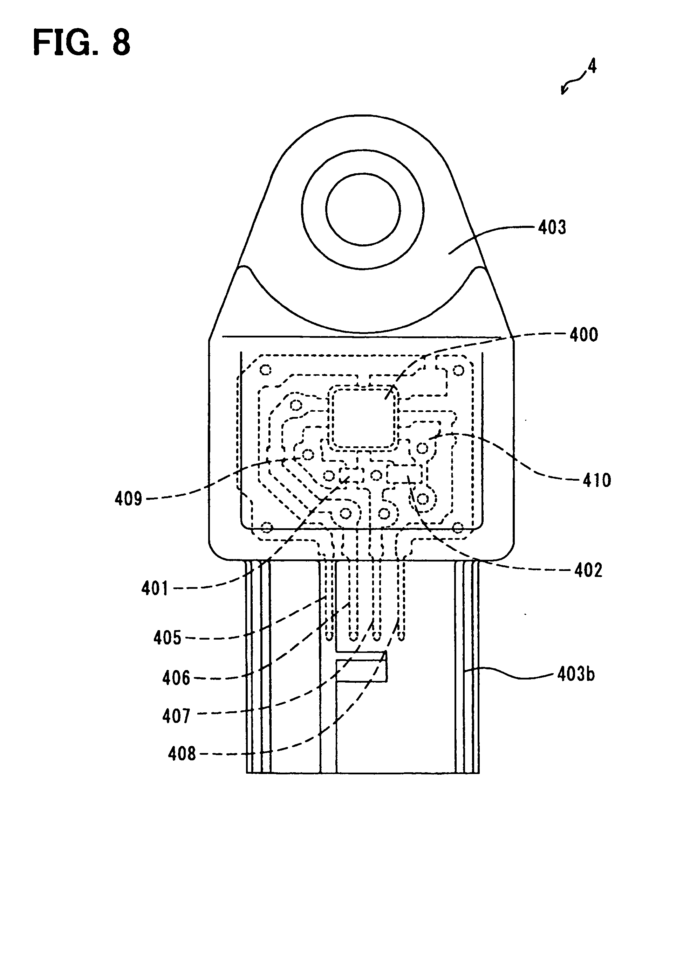

Referring to FIGS. 7 and 8, an acceleration sensor apparatus 4 according to a fourth embodiment of the present invention includes an acceleration sensing device 400, capacitors 401, 402, a sensor body 403, connector terminals 405-408, and conductive plates 409, 410. Differences between the first and fourth embodiments are as follows.

Like the first embodiment, the sensing device 400 is soldered on second end portions of the connector terminals 405-408. Thus, the sensing device 400 is physically, electrically connected directly to the connector terminals 405-408. The capacitors 401, 402 are soldered on the front side of the second end portion of the connector terminal 407. Thus, the capacitors 401, 402 are physically, electrically connected directly to the connector terminal 407. The sensing device 400 and the capacitors 401, 402 are soldered on the conductive plates 409, 410. Thus, the sensing device 400 and the capacitors 401, 402 are physically, electrically connected directly to the conductive plates 409, 410. In this way, the sensing device 400 and the capacitors 401, 402 are electrically connected together through the second end portions of the connector terminals 405-408 and the conductive plates 409, 410, thereby constructing an electronic circuit.

Unlike the first embodiment, the sensor body 403 do not have a cavity for accommodating the sensing device 400 and the capacitors 401, 402. The sensing device 400, the capacitors 401, 402, the second end portions of the connector terminals 405-408, and the conductive plates 409, 410 are integrally molded in the sensor body 403. Specifically, the sensing device 400, the capacitors 401, 402, the second end portions of the connector terminals 405-408, and the conductive plates 409, 410 are molded in the same material of which the sensor body 403 is made. For example, the sensor body 403 can be made of polybutylene terephthalate (PBT) resin. First end portions of the connector terminals 405-408 are exposed outside the sensor body 403 and extend outwardly from the sensor body 403. The sensor body 403 defines a connector housing 403b for accommodating the first end portions of the connector terminals 405-408.

As described above, according to the sensor apparatus 4 of the fourth embodiment, the sensing device 400, the capacitors 401, 402, the second end portions of the connector terminals 405-408, and the conductive plates 409, 410 are integrally molded in the sensor body 403. In such an approach, electrical junctions (i.e., solder junctions) between the sensing device 400, the capacitors 401, 402, the connector terminals 405-408, and the conductive plates 409, 410 can be surely protected.

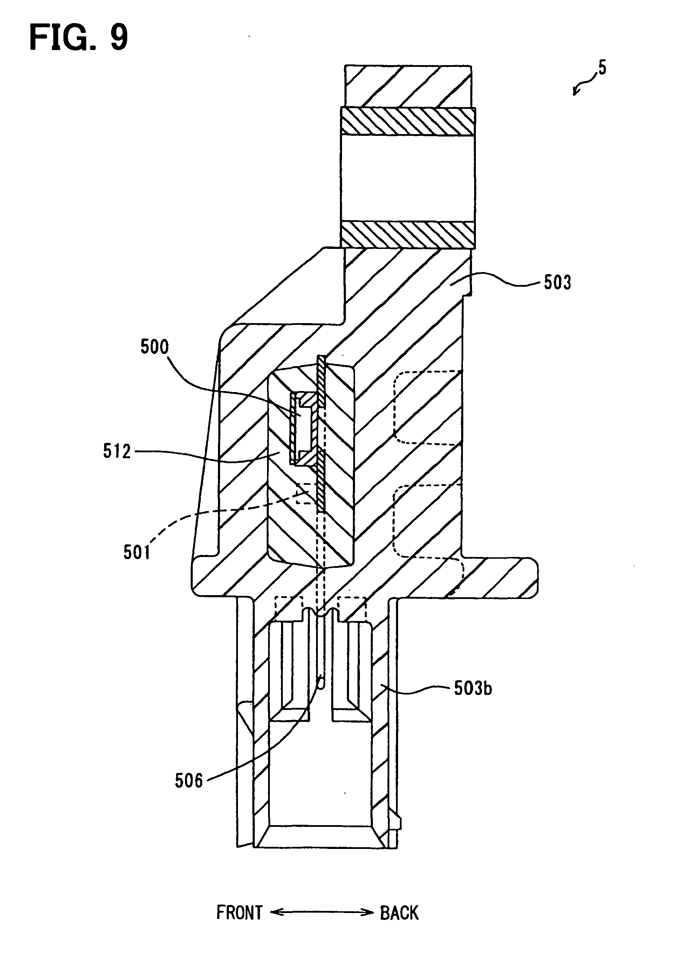

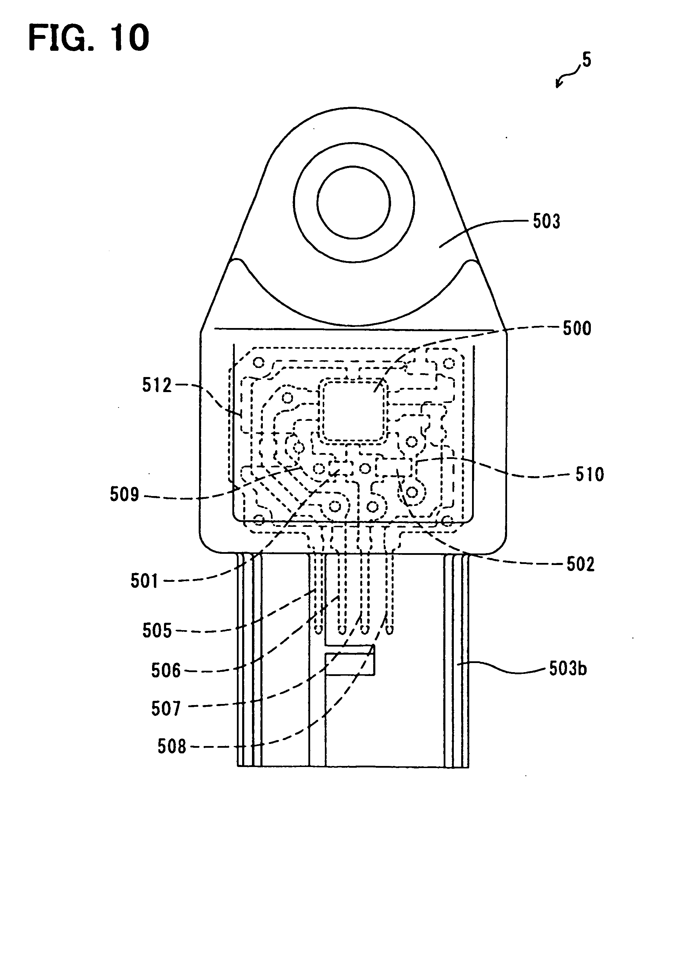

Referring to FIGS. 9 and 10, an acceleration sensor apparatus 5 according to a fifth embodiment of the present invention includes an acceleration sensing device 500, capacitors 501, 502, a sensor body 503, connector terminals 505-508, and conductive plates 509, 510. Differences between the fourth and fifth embodiments are as follows.

In the fifth embodiment, the sensing device 500, the capacitors 501, 502, the second end portions of the connector terminals 505-508, and the conductive plates 509, 510 are encapsulated in a molding resin member 512, and the molding resin member 512 is integrally molded in the sensor body 503. The molding resin member 512 is made of a material different from a material of which the sensor body 503 is made. For example, the sensor body 503 is made of polybutylene terephthalate (PBT) resin, and the molding resin member 512 is made of resin having a Young's modulus of greater than or equal to 8 gigapascals (Gpa) and a linear expansion coefficient approximately equal to a linear expansion coefficient of the sensing device 500, the capacitors 501, 502, the connector terminals 505-508, and the conductive plates 509, 510. For example, the molding resin member 512 can be made of resin having a linear expansion coefficient of less than or equal to 20 ppm/°C.

As described above, according to the sensor apparatus 5 of the fifth embodiment, the sensing device 500, the capacitors 501, 502, the second end portions of the connector terminals 505-508, and the conductive plates 509, 510 are encapsulated in the molding resin member 512. The molding resin member 512 helps prevent pressure and heat from being applied to electrical junctions (i.e., solder junctions) between the sensing device 500, the capacitors 501, 502, the connector terminals 505-508, and the conductive plates 509, 510, when the molding resin member 512 is integrally molded in the sensor body 503.

The molding resin member 512 is made of resin having a Young's modulus of greater than or equal to 8 Gpa. In such an approach, the applied pressure and heat can be greatly reduced. Further, the molding resin member 512 is made of resin having a linear expansion coefficient approximately equal to a linear expansion coefficient of the sensing device 500, the capacitors 501, 502, the connector terminals 505-508, and the conductive plates 509, 510. In such an approach, the electrical junctions between the sensing device 500, the capacitors 501, 502, the connector terminals 505-508, and the conductive plates 509, 510 can be protected from thermal stress due to thermal deformation of the sensing device 500, the capacitors 501, 502, the connector terminals 505-508, and the conductive plates 509, 510.

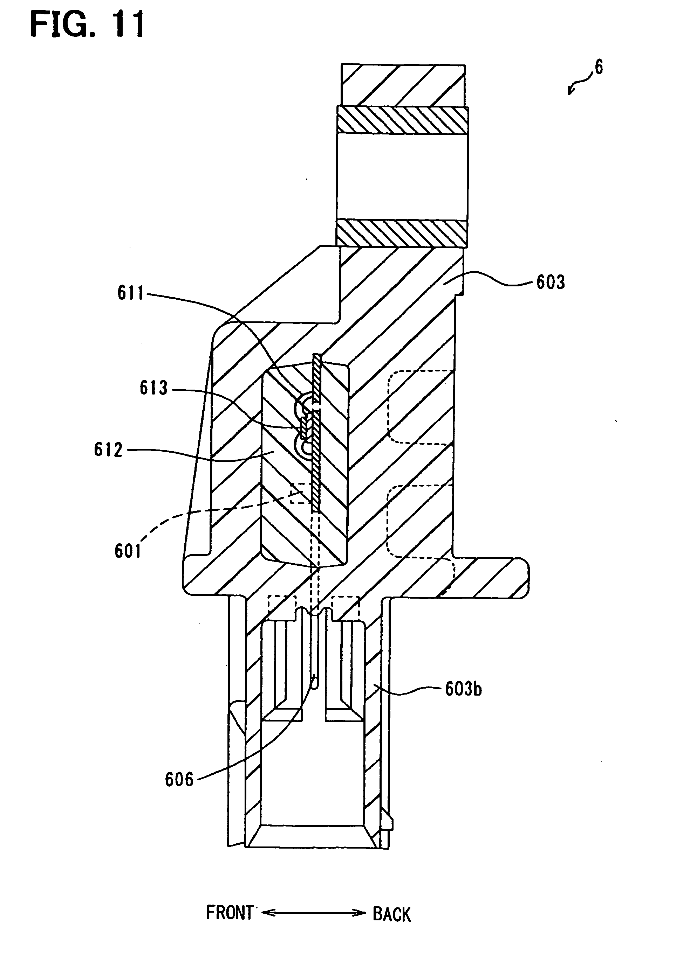

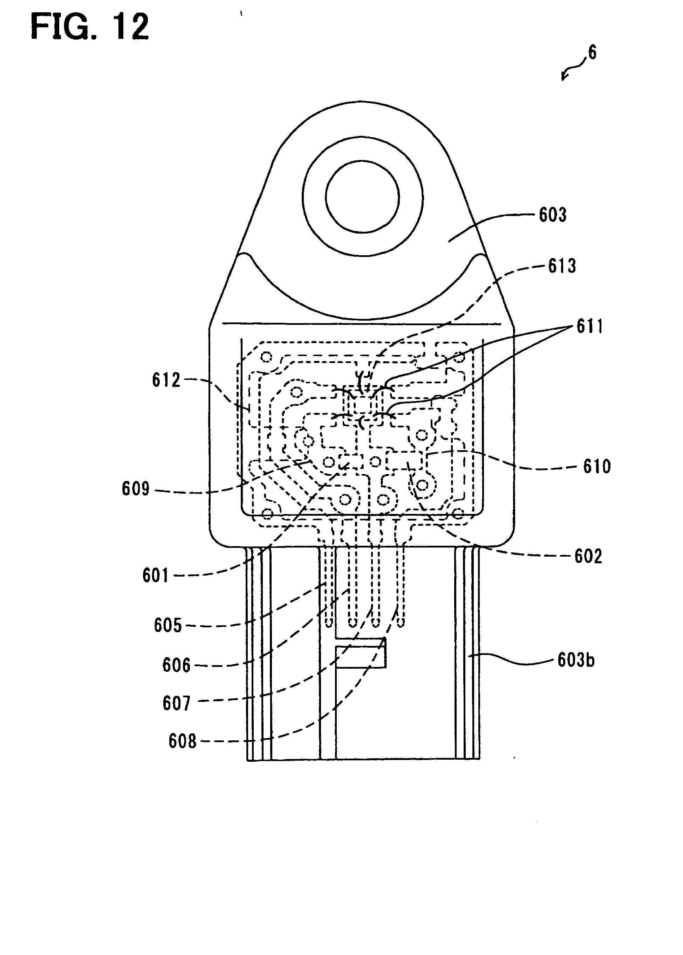

Referring to FIGS. 11 and 12, an acceleration sensor apparatus 6 according to a sixth embodiment of the present invention includes capacitors 601, 602, a sensor body 603, connector terminals 605-608, conductive plates 609, 610, and an acceleration sensing chip 613. Differences between the fifth and sixth embodiments are as follows.

As described in the first embodiment, each sensing element of the preceding embodiments is a semiconductor chip housed in a package, for example, made of ceramic. In contrast, the sensing chip 613 of the present embodiment is a semiconductor chip that is not housed in a package. The sensing chip 613 is directly fixed to a second end portion of the connector terminal 607 and electrically connected through bonding wires 611 to the conductive plates 609, 610 and the second end portions of the connector terminals 605-608.

Like the fifth embodiment, the capacitors 601, 602, the second end portions of the connector terminals 605-608, and the conductive plates 609, 610, and the sensing chip 613 are encapsulated in a molding resin member 612, and the molding resin member 612 is integrally molded in the sensor body 603. For example, the sensor body 603 is made of PBT resin, and the molding resin member 612 is made of resin having a Young's modulus of greater than or equal to 8 Gpa and having a linear expansion coefficient of less than or equal to 20 ppm/°C.

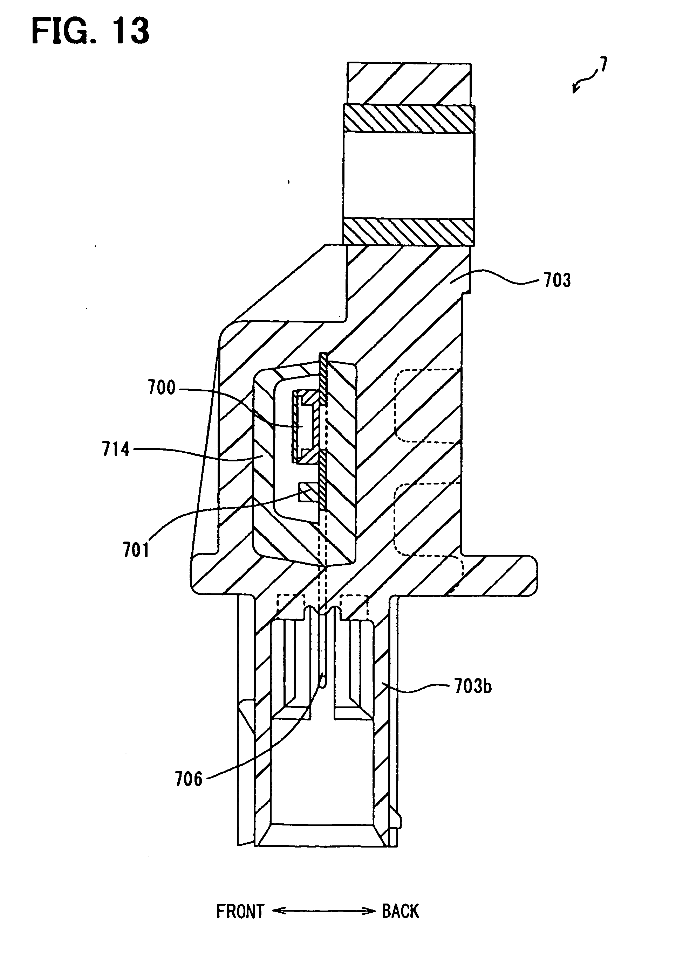

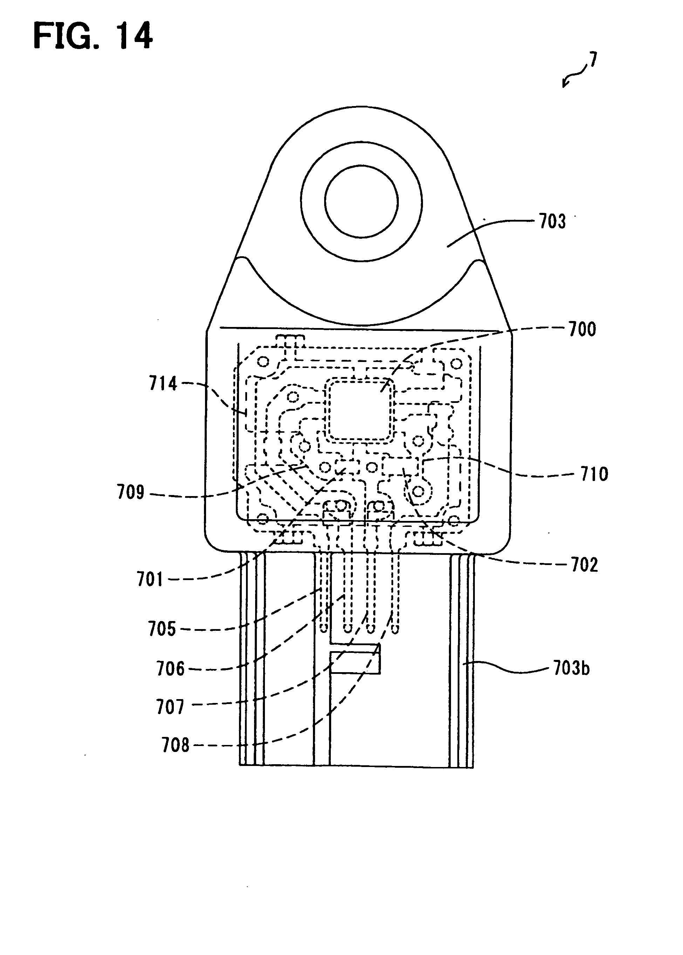

Referring to FIGS. 13 and 14, an acceleration sensor apparatus 7 according to a seventh embodiment of the present invention includes a sensing device 700, capacitors 701, 702, a sensor body 703, connector terminals 705-708, and conductive plates 709, 710. Differences between the fifth and seventh embodiments are as follows.

In the fifth embodiment, the sensing device 500, the capacitors 501, 502, the second end portions of the connector terminals 505-508, and the conductive plates 509, 510 are encapsulated in the molding resin member 512, and the molding resin member 512 is integrally molded in the sensor body 503. In contrast, in the present embodiment, the sensing device 700, the capacitors 701, 702, the second end portions of the connector terminals 705-708, and the conductive plates 709, 710 are accommodated in a circuit casing 714 made of resin, and the circuit casing 714 is integrally molded in the sensor body 703.

As described above, according to the sensor apparatus 7 of the seventh embodiment, the sensing device 700, the capacitors 701, 702, the second end portions of the connector terminals 705-708, and the conductive plates 709, 710 are accommodate in the circuit casing 714. Therefore, like the molding resin member 512 of the fifth embodiment, the circuit casing 714 helps prevent pressure and heat from being applied to electrical junctions (i.e., solder junctions) between the sensing device 700, the capacitors 701, 702, the connector terminals 705-708, and the conductive plates 709, 710, when the circuit casing 714 is integrally molded in the sensor body 703.

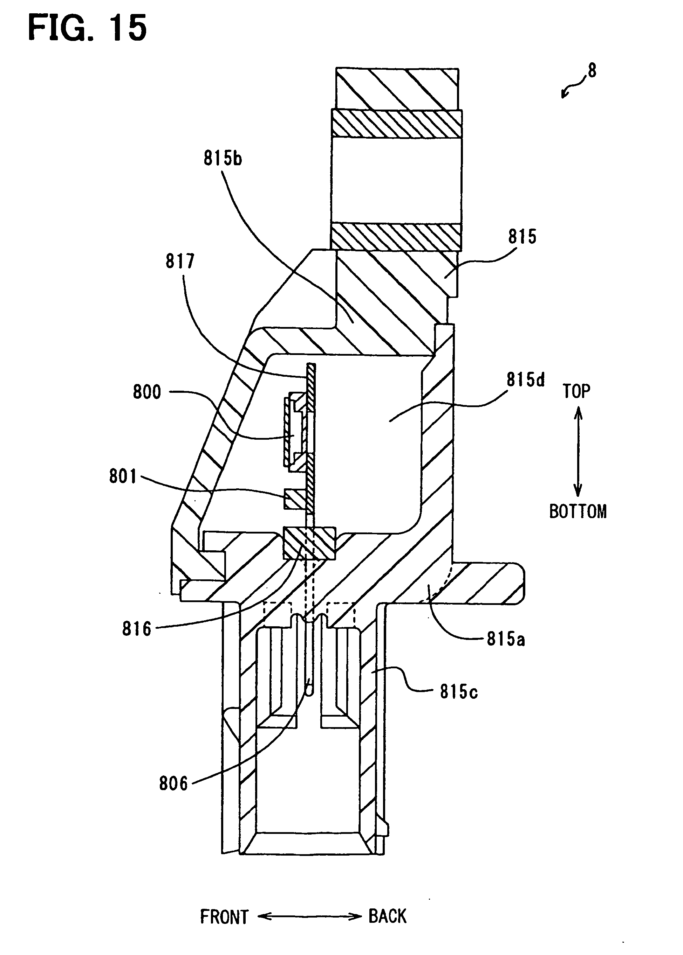

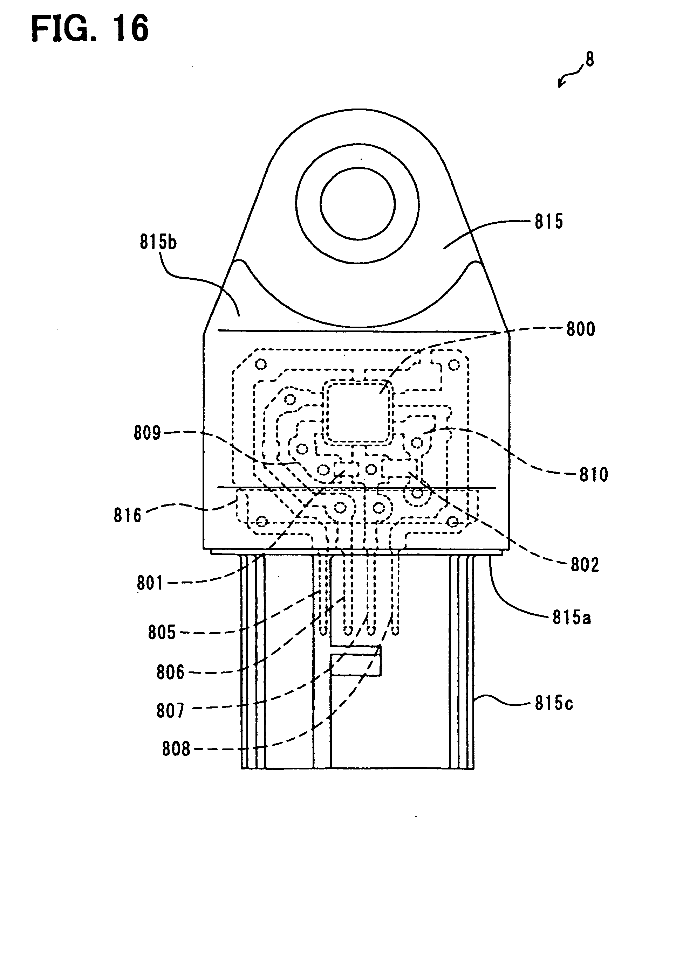

Referring to FIGS. 15-17B, an acceleration sensor apparatus 8 according to an eighth embodiment of the present invention includes a sensing device 800, capacitors 801, 802, a sensor body 815, connector terminals 805-808, and conductive plates 809, 810. Differences between the first and eighth embodiments are as follows.

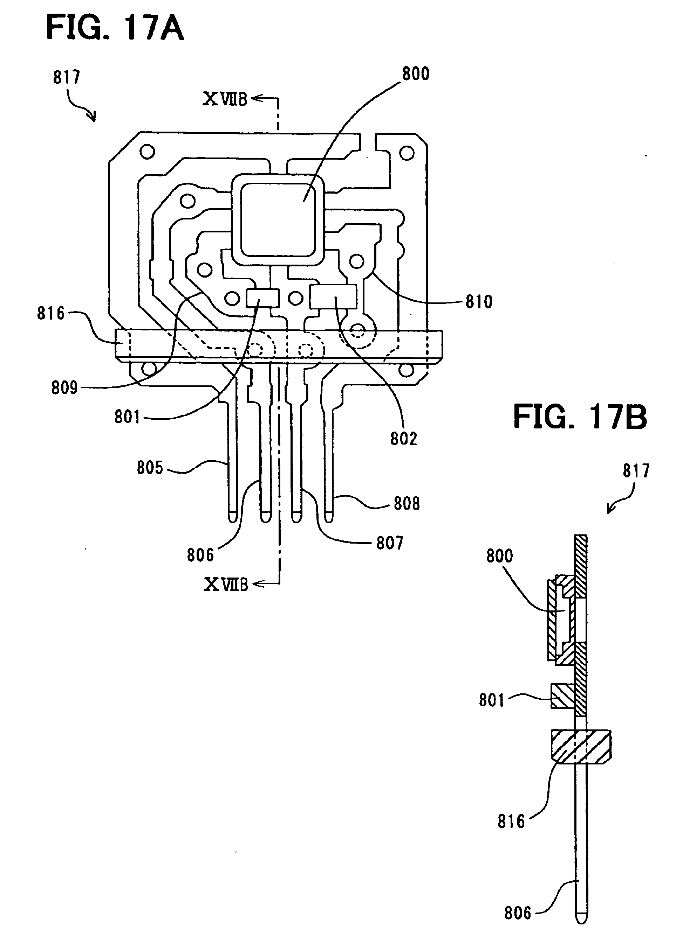

The sensor body 815 includes a bottom portion 815a and a top portion 815b. The sensing device 800 and the capacitors 801, 802 are fixed together and electrically connected together through the second end portions of the connector terminals 805-808 and the conductive plates 809, 810, thereby constructing an electronic circuit 817. As shown in FIG. 17, the connector terminals 805-808 and the conductive plate 810 are fixed together by a fixing member 816 made of resin. As shown in FIG 15, the fixing member 816 is fixed to the bottom portion 815a in such a manner that first end portions of the connector terminals 805-808 extends into a connector housing 815c. The electronic circuit 817 is accommodated in a cavity 815d, which is formed when the top and bottom potions 815a, 815b of the sensor body 815 are engaged together.

As described above, according to the sensor apparatus 8 of the eighth embodiment, the sensing device 800 and the capacitors 801, 802 are physically, electrically connected directly to the connector terminals 805-808 and the conductive plates 809, 810 to construct the electronic circuit 817. In such an approach, the sensing device 800 and the capacitors 801, 802 can be fixed together and electrically connected together without using a printed circuit board. Therefore, the sensor apparatus 8 can be manufactured at low cost, as compared to a conventional sensor apparatus that uses a printed circuit board. Further, the sensor body 815 is divided into the bottom and top portions 815a, 815b, and the electronic circuit 817 is fixed to the sensor body 815 by using the fixing member 816. In such an approach, the sensor apparatus 8 can be easily assembled.

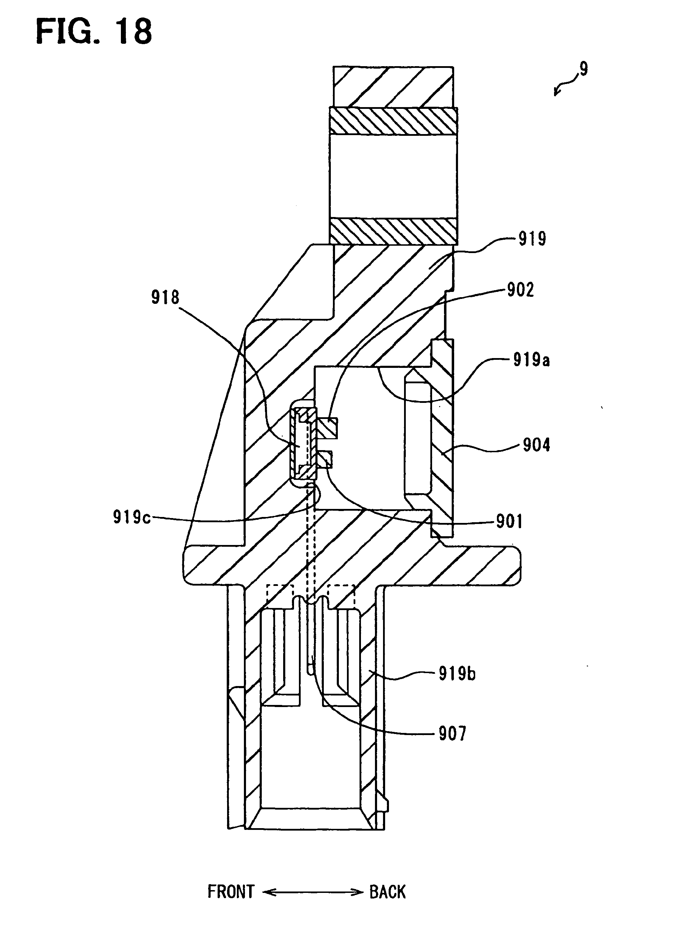

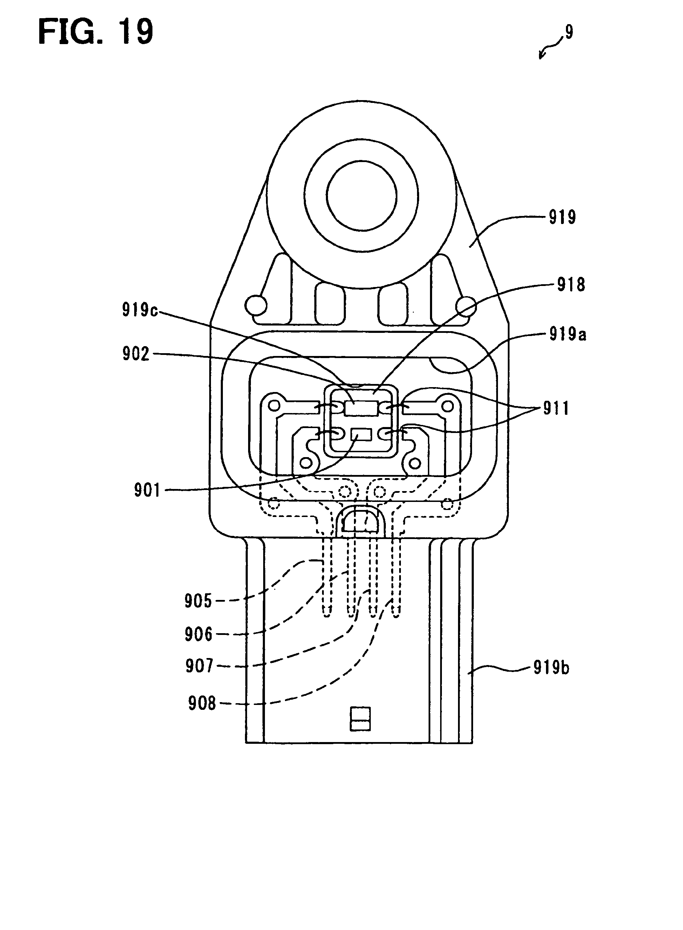

Referring to FIGS. 18 and 19, an acceleration sensor apparatus 9 according to a ninth embodiment of the present invention includes a sensing device 918, capacitors 901, 902, a sensor body 919, a lid 904, and connector terminals 905-908. Differences between the third and ninth embodiments are as follows.

The sensing device 918 has a front side exposed to a cavity 919a of the sensor body 919 and a back side, opposite to the front side, directly fixed to a bottom wall of the cavity 919a by an adhesive. The front side of the sensing device 918 is provided with trace patterns and electrode pads. The capacitors 901, 902 are directly fixed to the sensing device 918 and electrically connected to the trace patterns of the sensing device 918. The electrode pads of the sensing device 918 are electrically connected to the connector terminals 905-908 by bonding wires 911. Thus, the capacitors 901, 902 are electrically connected to the connector terminal 907 through the trace patterns of the sensing device 918 and the bonding wire 911. An opening of the cavity 919a is covered with the lid 904 so that the cavity 919a can be sealed.

As described above, according to the sensor apparatus 9 of the ninth embodiment, the sensing device 918 is directly fixed to the sensor body 919 and electrically connected to the connector terminals 905-908 by the bonding wires 911. The capacitors 901, 902 are directly fixed to the sensing device 918 and electrically connected to the connector terminals 905-908 through the trace patterns of the sensing device 918 and the bonding wire 911. In such an approach, the sensing device 918 and the capacitors 901, 902 can be fixed together and electrically connected together without using a printed circuit board. Therefore, the sensor apparatus 9 can be manufactured at low cost, as compared to a conventional sensor apparatus that uses a printed circuit board.

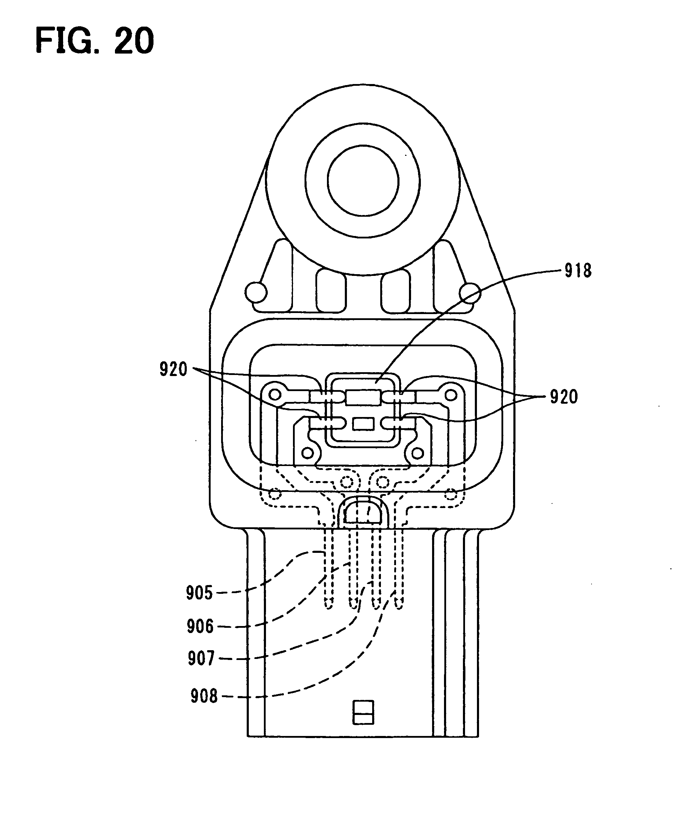

The embodiments described above may be modified in various ways. For example, as shown in FIG 20, in the eighth embodiment, the sensing device 918 can be electrically connected to the connector terminals 905-908 by leads 920 instead of the bonding wires 911. The leads 920 can be made from a thin metallic plate.

Such changes and modifications are to be understood as being within the scope of the present invention as defined by the appended claims.

## Claims

1. A sensor apparatus comprising:
a sensor body ( 503, 603) made of resin;
an electronic circuit housed in a cavity of the sensor body (503, 603) and including at least one electronic device ( 500-502, 601,602,613) configured to detect a physical quantity and output a sensor signal indicative of the detected physical quantity; and
a conductive terminal (505-508, 605-608) for electrically connecting the electronic circuit to an external apparatus, the terminal (505-508, 605-608) being integrally molded in the sensor body (503, 603) and having a first end portion located outside the sensor body (503, 603) and a second end portion located inside the sensor body (503, 603), **characterized in that**
the sensor body ( 503, 603) is made of one piece,
the electronic device is physically and electrically connected directly to the second end portion of the terminal (505-508, 605-608),
the electronic device and the second end portion of the terminal (505-508, 605-608) are encapsulated in the sensor body (503, 603),
the sensor apparatus further comprises a resin member (512, 612) in which the electronic device ( 500-502, 601,602,613) and the second end portion of the terminal are encapsulated, and
the resin member (512, 612) is integrally molded in the sensor body (503, 603).

2. The sensor apparatus according to claim 1,
wherein the electronic circuit includes a plurality of electronic devices physically and electrically connected directly to the second end portion of the terminal, and
wherein the plurality of electronic devices and the second end portion of the terminal are encapsulated in the resin member.

3. The sensor apparatus according to claim 1,
wherein the sensor body is made of a first type of resin, and wherein the resin member is made of a second type of resin different from the first type of resin, of which the sensor body is made.

4. The sensor apparatus according to claim 1,
wherein the resin member is made of resin having a Young's modulus of greater than or equal to 8 Gpa and a linear expansion coefficient of less than or equal to 20 ppm/ deg. C.

5. The sensor apparatus according to claim 1, further comprising:
a fixing member (816),
wherein the conductive terminal comprises a plurality of conductive terminals, and
wherein the fixing member (816) fixes the plurality of conductive terminals together.

## Patentansprüche

1. Sensorvorrichtung, die Folgendes aufweist:
einen Sensorkörper (503,603), der aus Harz gefertigt ist;
eine elektronische Schaltung, die in einem Hohlraum des Sensorkörpers (503,603) untergebracht ist und wenigstens eine elektronische Vorrichtung (500-502, 601, 602, 613) aufweist, die konfiguriert ist zum Erfassen einer physikalischen Größe und zum Ausgeben eines Sensorsignals, das die detektierte physikalischen Größe anzeigt; und
einen leitfähigen Anschluss (505-508,605-608) zum elektrischen Verbinden der elektronischen Schaltung mit einer externen Vorrichtung, wobei der Anschluss (505-508, 605-608) integral in dem Sensorkörper (503, 603) eingeformt oder eingegossen ist, und einen ersten Endabschnitt, der außerhalb des Sensorkörpers (503, 603) platziert ist, und einen zweiten Endabschnitt hat, der innerhalb des Sensorkörpers (503, 603) platziert ist, **dadurch gekennzeichnet, dass**
der Sensorkörper (503, 603) aus einem Stück gefertigt ist,
die elektronische Vorrichtung physikalisch und elektrisch direkt mit dem zweiten Endabschnitt des Anschlusses (505-508, 605-608) verbunden ist,
die elektronische Vorrichtung und der zweite Endabschnitt des Anschlusses (505-508, 605-608) in dem Sensorkörper (503, 603) gekapselt sind,
die Sensorvorrichtung ferner ein Harzelement (512, 612) aufweist, in welchem die elektronische Vorrichtung (500-502, 601, 602, 613) und der zweite Endabschnitt des Anschlusses gekapselt sind, und
das Harzelement (512, 612) integral in dem Sensorkörper (503, 603) eingeformt oder eingegossen ist.

2. Sensorvorrichtung nach Anspruch 1,
wobei die elektronische Schaltung eine Mehrzahl von elektronischen Vorrichtungen aufweist, die physikalisch und elektrisch direkt mit dem zweiten Endabschnitt des Anschlusses verbunden sind, und
wobei die Mehrzahl von elektronischen Vorrichtungen und der zweite Endabschnitt des Anschlusses in dem Harzelement gekapselt sind.

3. Sensorvorrichtung nach Anspruch 1,
wobei der Sensorkörper aus einem ersten Typ von Harz gefertigt ist, und wobei das Harzelement aus einem zweiten Typ von Harz gefertigt ist, das vom ersten Typ von Harz, aus dem der Sensorkörper gefertigt ist, verschieden ist,.

4. Sensorvorrichtung nach Anspruch 1,
wobei das Harzelement aus Harz gefertigt ist, das ein Elastizitätsmodul von größer als oder gleich 8 GPa und einen linearen Ausdehnungskoeffizienten von weniger als oder gleich 20 ppm/ Grad C hat.

5. Sensorvorrichtung nach Anspruch 1, ferner aufweisend:
ein Befestigungselement (816),
wobei der leitfähige Anschluss eine Mehrzahl von leitfähigen Anschlüssen aufweist, und
wobei das Befestigungselement (816) die Mehrzahl von leitfähigen Anschlüssen aneinander befestigt.

## Revendications

1. Appareil de détection comprenant :
un corps de capteur (503, 603) fabriqué en résine ;
un circuit électronique logé dans une cavité du corps de capteur (503, 603) et comportant au moins un dispositif électronique (500-502, 601, 602, 613) configuré pour détecter une quantité physique et pour délivrer en sortie un signal de capteur indiquant la quantité physique détectée ; et
une borne conductrice (505-508, 605-608) pour lier électriquement le circuit électronique à un appareil externe, la borne (505-508, 605-608) étant moulée intégralement dans le corps de capteur (503, 603) et ayant une première partie d'extrémité située à l'extérieur du corps de capteur (503, 603) et une deuxième partie d'extrémité située à l'intérieur du corps de capteur (503, 603), **caractérisé en ce que**
le corps de capteur (503, 603) est fabriqué en une seule pièce,
le dispositif électronique est physiquement et électriquement lié directement à la deuxième partie d'extrémité de la borne (505-508, 605-608),
le dispositif électronique et la deuxième partie d'extrémité de la borne (505-508, 605-608) sont encapsulés dans le corps de capteur (503, 603),
l'appareil de détection comprend en outre un élément en résine (512, 612) dans lequel le dispositif électronique (500-502, 601, 602, 613) et la deuxième partie d'extrémité de la borne sont encapsulés, et
l'élément en résine (512, 612) est moulé intégralement dans le corps de capteur (503, 603).

2. Appareil de détection selon la revendication 1,
dans lequel le circuit électronique comporte une pluralité de dispositifs électroniques physiquement et électriquement liés directement à la deuxième partie d'extrémité de la borne, et
dans lequel la pluralité de dispositifs électroniques et la deuxième partie d'extrémité de la borne sont encapsulés dans l'élément en résine.

3. Appareil de détection selon la revendication 1,
dans lequel le corps de capteur est fabriqué d'un premier type de résine, et
dans lequel l'élément en résine est fabriqué d'un deuxième type de résine différent du premier type de résine, dont le corps de capteur est fabriqué.

4. Appareil de détection selon la revendication 1,
dans lequel l'élément en résine est fabriqué en résine ayant un module d'Young supérieur ou égal à 8 Gpa et un coefficient de dilatation linéique inférieur ou égal à 20 ppm/deg. C.

5. Appareil de détection selon la revendication 1, comprenant en outre :
un élément de fixation (816),
dans lequel la borne conductrice comprend une pluralité de bornes conductrices, et
dans lequel l'élément de fixation (816) fixe la pluralité de bornes conductrices ensemble.
